(19) Europäisches Patentamt
European Patent Office
Office européen des brevets

(11) Publication number: **0 355 157 B1**

(12) # EUROPEAN PATENT SPECIFICATION

(45) Date of publication of patent specification: **28.07.93**

(51) Int. Cl.5: **C08G 75/04**

(21) Application number: **89902977.1**

(22) Date of filing: **09.01.89**

(86) International application number:
**PCT/US89/00061**

(87) International publication number:
**WO 89/06666 (27.07.89 89/16)**

(54) **ADHESION PROMOTERS FOR THIOLENE ADHESIVE FORMULATIONS.**

(30) Priority: **13.01.88 US 144894**
**16.02.88 US 156314**

(43) Date of publication of application:
**28.02.90 Bulletin 90/09**

(45) Publication of the grant of the patent:
**28.07.93 Bulletin 93/30**

(84) Designated Contracting States:
**BE DE FR GB IT NL SE**

(56) References cited:
**US-A- 3 728 240**

(73) Proprietor: **LOCTITE CORPORATION**
**705 North Mountain Road**
**Newington, Connecticut 06111(US)**

(72) Inventor: **CLARK, Paul, J.**
**210 W. Mountain Road**
**West Simsbury, CT 06092(US)**
Inventor: **JACOBINE, Anthony, F.**
**310 North Wall Street**
**Meriden, CT 06450(US)**
Inventor: **GLASER, David, M.**
**52 Benson Street**
**New Britain, CT 06051(US)**

(74) Representative: **Marchant, James Ian et al**
**Elkington and Fife Prospect House 8 Pembroke Road**
**Sevenoaks, Kent TN13 1XR (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.6/3.3.1)

## Description

### Background of the Invention

In the field of adhesive bonding there is a substantial body of literature devoted to improving adhesion of various adhesive systems. The various techniques include altering substrate surfaces by cleaning, priming with intermediate adhesive materials, irradiating the surfaces, etc.; subjecting curable adhesives to specifically sequenced cure cycles; priming the substrate surfaces with various cure initiators or accelerators; and altering the adhesive composition by including specific compounds which improve the bond strength of the adhesive to the bonded substrates. Examples of the compounds in the latter category are silane compounds used in RTV silicone formulations which contain both polar groups compatible with metallic surfaces and hydrolyzable groups; and acrylic, maleic or fumaric compounds with various acid functionalities as well as silane compounds with acrylic and hydrolyzable groups, all of which have been used in acrylic adhesives of various types. Other examples are well known in the various curable adhesive arts.

The utility of co-curable adhesion promoters, however, tends to be very system specific. The particular adhesion promoter must not only provide functionalities which effectively provide a bridge from the adhesive to the substrate surface, it must also not significantly deteriorate the performance of the adhesive. Consequently, the selection of adhesion promoting additives in new curable systems cannot be made on the basis of performance in another curable system.

Thiolene curable systems involve addition of thiol (-SH) groups across an olefinic or acetylenic double bond. The reaction may be catalyzed by acids or free radicals. A detailed discussion of the mechanism of this reaction and of the academic literature in this field may be found in Oae, ed., "Organic Chemistry of Sulfur", Plenum Press New York, New York, pp. 131-187 (1977). Oswald et al reportedly disclosed photocrosslinkable compositions employing tetraallyl ester compounds and dithiols at the April 1965 ACS meeting in Detroit, Michigan. See Oswald et al, Die Makromolekulare Chemie, 97, 258-266 (1966). Formulations of di-or polythiols and dienes or polyenes which are curable to solids by chemical or photolytic radical generators are also described in U.S. Patents 2,767,156; 3,661,744; 3,240,844; 4,119,617; and 4,157,421. All of these prior art curable formulations have involved polythiol additions to double bonds of linear olefins or acetylene compounds.

Silicone polymers having alkyl thiol groups are disclosed in U.S. 4,289,867 and background references discussed therein. In U.S. 4,284,539 other silicones having linear and cyclic mercaptoalkyl groups are described as are the thiol-ene reactions of such materials with silicones having vinyl or silacyclopentene groups. Peroxide cured compositions of vinyl terminated silicones with polythiols having organic or silicone are described in U.S. 3,445,419.

In copending application Ser. No. 099,676, filed September 21, 1987 and incorporated herein by reference, there are described improved thiolene curable systems based on compounds having a plurality of norbornenyl or analogous bicyclic ene groups.

Despite the extensive literature on thiolene compositions applicants have been unable to locate any reference which teaches adhesion promoting techniques for such compositions and in particular, have been unable to locate any references disclosing adhesion promoting co-curable additives for thiolene compositions.

In U.S. 4,435,497 there are described polymerizable thiolene resist compositions in which the ene compound contains at least one each of (meth)acryloxy groups; allyl, methallyl, or 1-propenyl groups bonded through an oxygen or oxycarbonyl group to an aromatic or cycloaliphatic nucleus; and carboxylic acid groups. The function of the carboxylic acid group is understood as a latent debonding agent, allowing removal of uncured formulation with a mild base wash and removal of the cured resist with a strong base wash.

### Summary of the Invention

The invention in one aspect comprises a thiolene composition which includes an additive which promotes adhesion to metals and other polar substrates the adhesion promoting compound selected from

a) acrylic, methacrylic or norbornene acid phosphate esters;

b) maleic, norbornene dicarboxylic and fumaric acids and half acid esters and peresters of maleic fumaric and norbornene dicarboxylic acids; and

c) norbornene, acrylic or methacrylic functional silanes having two or three hydrolyzable groups bound to the silicon atom thereof.

A further aspect of the invention comprises a composition as previously described wherein the ene compound contains a plurality of norbornene or similar bicyclic functional ene groups.

A still further aspect of the invention comprises an adhesively bonded article wherein the adhesive is a cured composition as described above.

In a further embodiment of the invention an adhesion promoting compound as described above is used as a surface primer to improve adhesion of cured thiolene compositions, especially of thermally cured thiolene adhesive compositions.

Detailed Description of the Invention

The ene resins useful in the invention are compounds which may be represented by the formula:

$$[A]-(X)_n$$

where A is an n-valent organic or polyorganosiloxane residue, X is a terminal group which includes an aliphatically unsaturated carbon-carbon double or triple bond and n is an integer of at least 2. Suitable X groups include those represented by the formulas:

(a) 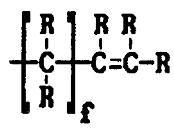 ,

(b) 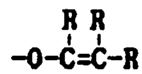 ,

(c) 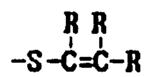 ,

(d) 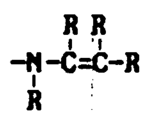 ,

(e) 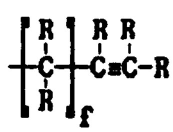 ,

(f) 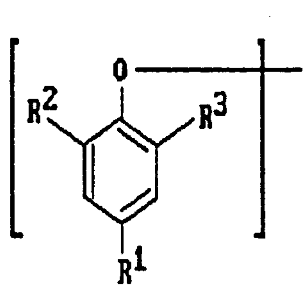 ,

(g) 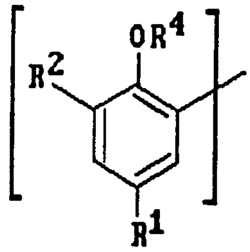 ,

(h) 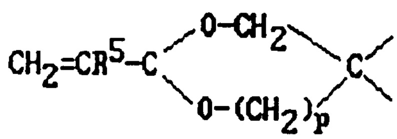 , or

(i) 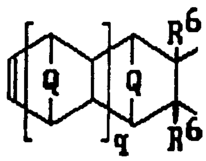 .

Thiolene compositions based on ene compounds having terminal groups (a) to (e) above are described in U.S. 3,661,744. In the groups (a) to (e), f is an integer from 1 to 9; R is a radical selected from the group consisting of hydrogen, fluorine, chlorine, furyl, thienyl, pyridyl, phenyl and substituted phenyl, benzyl and substituted benzyl, alkyl and substituted alkyl, alkoxy and substituted alkoxy, and cycloalkyl and substituted cycloalkyl. The substituents on the substituted members are selected from the group consisting of nitro, chloro, fluoro, acetoxy, acetamide, phenyl, benzyl, alkyl, alkoxy and cycloalkyl alkyl and alkoxy groups have from one to nine carbon atoms and cycloalkyl groups have from three to eight carbon atoms.

Ene compounds having terminal groups (f) and (g), above are described in U.S. Patents 4,543,397 and 4,640,849, respectively. Thiolene compositions of such compounds are described in U.S. Ser. No. 001,498, filed January 5, 1987, corresponding to EP 229033. In formulas (f) and (g) at least one of $R^1$, $R^2$, and $R^3$ is a member of the group consisting of vinyl, 1-propenyl and isopropenyl and the remaining $R^1$, $R^2$, and $R^3$ groups are selected from H, lower alkyl and alkoxy. $R^4$ is alkyl.

Thiolene compositions in which the ene compound has terminal ene groups represented by formula (h) are described in U.S. Patents 4,119,617 and 4,157,421. In formula (h), $R^5$ is H or alkyl and p is 0 or 1.

Preferred ene compounds and thiolene compositions based thereon are described in WO 88/02902. These preferred compositions have plural norbornene groups represented by formula (i) above, where $R^6$ is H or alkyl Q is $CR^6{}_2$, O, S, $NR^6$ or $SO_2$ and q is an integer from 0 to 10. Most suitably q is 0 and Q is $CR^6$. Preferred enes of formula (i) include compounds with two or more nadimide groups such as

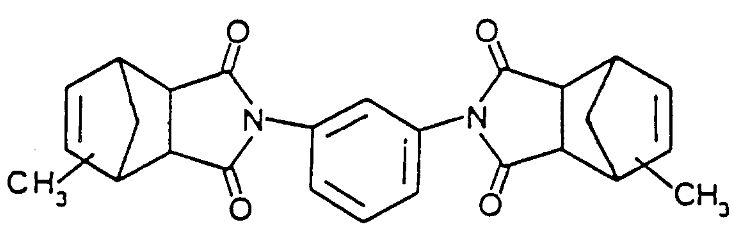

and ii) compounds derived from Diels-Alder reaction of cyclopentadiene with a plural acrylate or methacrylate compound. The latter compounds may be represented by the formula:

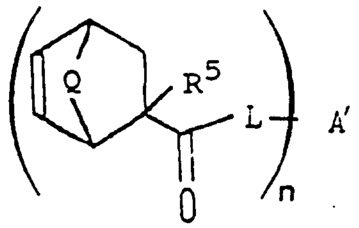

where A' is as defined above for A, L is O, S or $NR^5$ and n, $R^5$, and Q are as previously defined.

Particularly preferred are ene compounds represented by the formula:

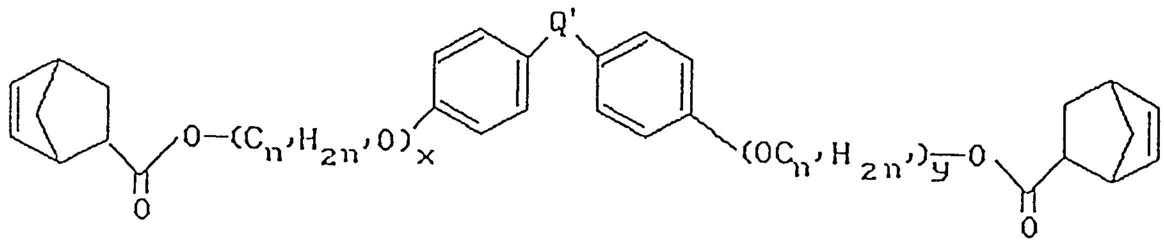

where Q' is as defined above for Q, n' is 1-6 and x and y are integers of one or more.

The polythiol component of the inventive compositions may be any compound having two or more thiol groups per molecule. Suitable polythiols are described in U.S. 3,661,744 at Col. 8, line 76 - Col. 9, line 46, in U.S. 4,119,617, Col. 7, lines 40-57, U.S. 3,445,419 and U.S. 4,289,867. Especially preferred are polythiols obtained by esterification of a polyol with an $\alpha$- or $\beta$-mercaptocarboxylic acid such as thioglycolic acid, and $\beta$-mercaptopropionic acid. Particularly preferred polythiols are pentaerythritol-tetrakis-mercaptoacetate and pentaerythritol-tetrakis-$\beta$-mercaptopropionate.

The ratio of the polyene to the polythiol component can be varied widely. Generally it is preferred that the ratio of thiol to ene groups be between 1:4 and 4:1 but ratios outside this range may occasionally be usefully employed if the numbers of ene or thiol groups per molecule of the excess component is particularly high.

The thiolene composition includes an effective amount of a free radical catalyst in addition to the thiol and ene ingredients. The free radical catalyst may be a photoinitiator, however, it will most usually be a thermal catalyst since the benefits of the invention are most desirable in applications for adhering two substrates together. Such applications rarely permit photoinitiated curing. The advantages of the invention are especially apparent with zinc surfaces, such as galvanized steel substrates. The thermal initiator may be a peroxide compound suitably a diacyl peroxide such as benzoyl peroxide, a hydroperoxide such as cumene hydroperoxide or a perester such as t-butyl perbenzoate. Other thermal radical initiators which may be employed include azonitrile compounds such as 2,2'-azobis(iso-butyronitrile), and benzopinacol compounds, such as benzopinacol and the substituted benzopinacols disclosed in U.S. 4,330,283. Effective amounts of peroxy compounds are typically in the range of 0.1-5%. Effective amounts of azonitriles are typically in the range of 0.1-1% by weight of the compositions. Effective amounts of benzopinacols are typically in the range of 0.1-2% by weight.

The thiolene composition may also include stabilizers, fillers, reinforcing agents, thixotropic agents, and other conventional ingredients known in the thiolene and adhesive formulation arts. Useful stabilizers include conventional free radical stabilizers and certain vinyl compounds disclosed in U.S. 3,619,393.

The inventive compositions are characterized by the presence of an adhesion promoting compound as described above. The adhesion promoting compound may be present as a component of the base thiolene adhesive formulation or as a separate ingredient, applied to the substrate as a primer prior to application of the base adhesive, which diffuses into the surface contacting layers of the base adhesive prior to or during the curing reaction.

The adhesion promoting compound may be an acrylate or methacrylate acid phosphate ester, a corresponding norbornenyl compound. The acrylate and methacrylate acid phosphate esters are compounds which include at least one acrylate or methacrylate group and a group of the formula:

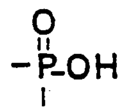

References which describe such acid phosphate (meth)acrylic esters and compositions thereof include U.S. patents 3,754,972; 3,987,127; 4,044,044; 4,250,007; 4,223,115; 4,293,665; 4,322,509; 4,452,944; 4,433,124; 4,434,278; 4,259,117; 4,368,043; 4,499,251; 4,525,493; and 4,515,930. Other such references include Jpn Kokai 57/167364 (1982); Jpn Kokai 49/20238 (1974); Jpn Kokai 49/84964 (1984), see Chem. Abst. 101: 153164k; Jpn Kokai 56/100803 (1981), see Chem. Abst. 95:221461q; EP 0058483; and EP 0074708.

Most preferably, the acid phosphate esters have the formula:

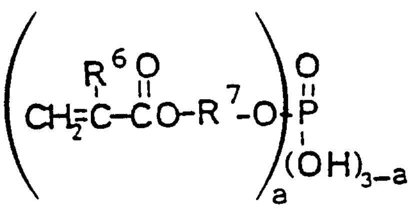

where $R^6$ is H or methyl, $R^7$ is a divalent organic residue having from 2-40 carbon atoms and a is 1 or 2. Suitably, $R^7$ is $C_2$-$C_{10}$ alkylene. Examples of commercially available phosphate ester compounds include mono(methacryloxyethyl)phosphate; bis(methacryloxyethyl)phosphate; mono(acryloxyethyl)phosphate; bis-(acryloxyethyl)phosphate; mixed mono and bis(acryloxyhexyl)phosphate and mixed mono and bis-(methacryloxyhexyl)phosphate.

Corresponding norbornene acid phosphate esters are acid phosphate esters as described above in which the (meth)acrylate group is replaced with a norbornene-5-carboxylate group:

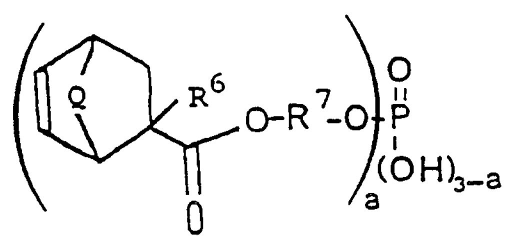

Such compounds can be prepared by reaction of $POCl_3$ with a 2-hydroxyalkylnorbornene carboxylate, followed by hydrolysis, or by Diels-Alder reaction of cyclopentadiene and a (meth)acrylic acid phosphate ester. Other norbornene phosphate monomers can be prepared by $POCl_3$ reaction with other norbornenyl functional alcohols such as norbornene methanol, followed by hydrolyis to the mono or bis 5-norbornene methylphosphate:

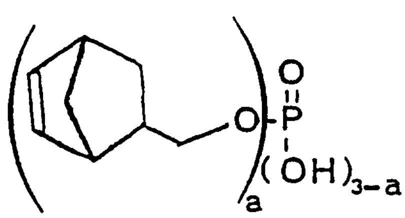

A second class of adhesion promoting additive comprises carboxylic acids selected from the the group consisting of maleic, norbornene dicarboxylic and fumaric acids and half acid/esters or half acid/peresters of maleic, fumaric and norbornene dicarboxylic acids. Suitable peresters include mono-*t*-butylperoxy maleate (peroxymaleic acid) and mono-*t*-butylperoxy fumarate. Suitable half esters are hydrocarbyl and hydrocarbylether maleates and fumarates, particularly monoalkylmaleates and monoalkyleneoxyalkyl maleates.

The adhesion improving performance of these acidic compounds, particularly on zinc surfaces such as galvanized steel is surprising. Acrylic and methacrylic acids have been observed to reduce thermal resistance and actually lessen adhesion of anaerobic acrylic adhesives to zinc substrates. Although maleate double bonds will undergo thermally induced addition of thiol, the maleate double bond is significantly less susceptible to radical catalyzed thiol addition than allylic double bonds under ambient conditions. Norbornene dicarboxylic acid is not known to have been reported as an adhesion promoter in any system. At least one other unsaturated acid, 5-allylbarbituric acid, has been shown to provide some adhesion promotion on steel substrates but its performance on zinc substrates is much worse than controls employing no adhesion promoter.

A final class of compounds useful as thiolene adhesion promoters are norbornene, or acrylate, functional silyl compounds which also have two or three hydrolyzable groups bound to the silicon atom. Suitable hydrolyzable groups are known in the art and include alkoxy, acetoxy, and oxime groups. Acetoxy groups are preferred. Such compounds are useful for improving adhesion to glass and, again surprisingly, to zinc substrates. Examples of such compounds include 5-(triacetoxysilyl)norbornene and acryloxyethyltriacetoxysilane.

The adhesion promoter may be used either as a component of the composition, uniformly dissolved suspended in the mixture of thiol and ene resins or as a surface primer which difuses into the adhesive compositions at the adhesive/substrate interface. When directly mixed into the composition the adhesion promoter may be usefully employed at levels of between 0.1% and 10%, preferably between about 0.5% and 5% and more preferably between about 1% and 3%, based on total composition weight. Perester adhesion promoters can optionally be used as both initiator and adhesion promoter in such directly mixed formulations, eliminating the need for a separate thermal initiator. When used as a surface primer the adhesion promoter is preferably dissolved in a neutral solvent.

The invention is illustrated by the following non-limiting examples:

Example 1 (Preparative example of preferred ene resin)

Sartomer 351™ (diacrylate ester of ethoxylated bisphenol A, 1 mole) was stirred at 40 °C and freshly cracked cyclopentadiene (2.2 equivalents) was added at such a rate that the reaction temperature rose to ca. 75 °C. The reaction mixture was maintained at 75 °C overnight. The reaction mixture was then stripped on a rotary evaporator. Analysis of the reaction mixture by HPLC showed the conversion to be complete. The product, ethoxylated bisphenol A-bis(norborn-2-ene-carboxylate) may be represented by the formula:

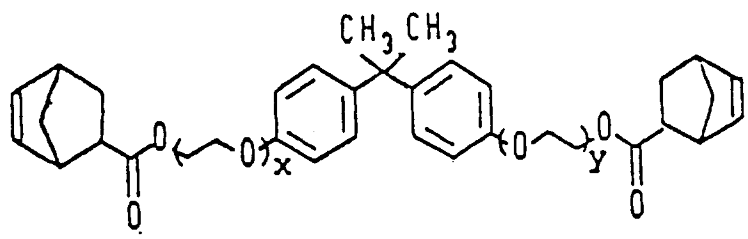

where x + y is an average 3.4

Example 2

An adhesive comprising a base composition of ethoxylated bisphenol A-bis(norbornene-2-ene-5-carboxylate) 70%, pentaerythitol tetra-(3-mercaptopropionate) 28% and *t*-butylperoxy benzoate 2%, and a primer composition of 1% by weight PA-21, a commercial mixture of mono and bis acryloxyhexylphosphate in methyl ethyl ketone was prepared. The primer composition was applied to pairs of 1 inch x 4 inch (2.54 cm x 10.16 cm) test specimens and the solvent was allowed to evaporate. The base composition was then applied and the test specimens were then joined and the adhesive cured by placing the joined assembly in a 250 °F (121 °C) oven for 2 hrs. Controls using no primer were run simultaneously. Results on three test specimen materials at two different bond gaps are shown in table 1. The results in all tables are averages of three samples each.

Table I

| ADHESION PROMOTERS FOR THIOLENE HEAT CURED FORMULATIONS | | | | | |
|---|---|---|---|---|---|
| Substrate | Adhesion Promoter | Gap | | TSS | |
| | | (mil) | mm | (lb/in$^2$) | kg/cm$^2$ |
| Steel | None* | (0) | 0 | (2311) | 162 |
| Steel | PA-21 | (0) | 0 | (4478) | 315 |
| Steel | None* | (10) | 0.25 | (1002) | 70 |
| Steel | PA-21 | (10) | 0.25 | (3279) | 231 |
| Galvanized | None* | (0) | 0 | (505) | 36 |
| Galvanized | PA-21 | (0) | 0 | (2679) | 188 |
| Galvanized | None* | (10) | 0.25 | (404) | 28 |
| Galvanized | PA-21 | (10) | 0.25 | (2278) | 160 |
| Copper | None* | (0) | 0 | (1170) | 82 |
| Copper | PA-21 | (0) | 0 | (1381) | 97 |
| Copper | None* | (10) | 0.25 | (787) | 55 |
| Copper | PA-21 | (10) | 0.25 | (972) | 68 |

* Comparison examples

Example 3

A control adhesive was prepared using the base formulation of the previous example without a primer. A modified adhesive using 2% peroxymaleic acid (POMA) in place of the 2% *t*-butylperoxy benzoate in the control was also prepared. Steel and galvanized specimens were bonded and tested as in the previous example. The results shown in Table II demonstrate that peroxymaleic acid functions effectively as an adhesion promoter as well as an initiator.

Table II

| PEROXYMALEIC ACID INITIATED HEAT CURED THIOLENE FORMULATIONS | | | | | |
|---|---|---|---|---|---|
| Substrate | Adhesion Promoter | Gap | | TSS | |
| | | (mil) | mm | (lb/in$^2$) | kg/cm$^2$ |
| Steel | None* | (0) | 0 | (2836) | 199 |
| Steel | POMA | (0) | 0 | (3149) | 221 |
| Steel | None* | (10) | 0.25 | (1334) | 94 |
| Steel | POMA | (10) | 0.25 | (3101) | 218 |
| Galvanized | None* | (0) | 0 | (684) | 48 |
| Galvanized | POMA | (0) | 0 | (1578) | 111 |
| Galvanized | None* | (10) | 0.25 | (440) | 31 |
| Galvanized | POMA | (10) | 0.25 | (2811) | 198 |

* Comparison examples

Example 4

Adhesives were prepared as in Example 2 except that the primer used was a 1% solution of the compounds listed in Table III. The adhesives were applied to galvanized steel test specimens, cured, and tested as in Examples 2 and 3. The results given in Table III demonstrate that 5-allylbarbituric acid, an unsaturated carboxylic acid outside the scope of this invention reduced adhesion and 3-norbornenyl propenoic acid, another unsaturated acid outside the scope of the invention, provided relatively little adhesion improvement whereas the remaining compounds, all within the scope of the invention, with the

exception of the control and acrylic acid, provided significant improvement.

Table III

| *t*-Butylperoxy Benzoate Heat Cured Norbornenes Thiol Formulation Tensile Shear Strength Adhesion Promoter Primed As Received Galvanized Steel Lap Shears | | |
|---|---|---|
| Adhesion Promoter | TSS | |
| | ($lb/in^2$) | $kg/cm^2$ |
| Control (None)* | (1238) | 87 |
| Maleic Acid | (2083) | 146 |
| 2-(triacetoxysilyl) Norborn-5-ene | (1702) | 120 |
| PA-21 | (2438) | 171 |
| 3-Norbornenylpropenoic Acid* | (1352) | 95 |
| 5-Allylbarbituric Acid* | (858) | 60 |
| Acrylic Acid* | (1862) | 131 |
| Norbornene 2,3 dicarboxylic Acid | (1788) | 126 |
| t-butylperoxy Maleate | (2017) | 142 |

* Comparison examples

## Example 5

Example 4 was repeated except that steel lap shear coupons were used as the test specimens. The results in Table IV are from two different test series. On this substrate the norbornenylpropenoic acid reduced adhesion whereas all other materials improved adhesion in varying degrees.

Table IV

| *t*-Butyl Perbenzoate Heat Cured Norbornene-Thiol Formulation Tensile Shear Strengths Adhesion Promoter Primed As Received Steel Laps | | | |
|---|---|---|---|
| Adhesion Promoter | TSS | | Test Series |
| | ($lbs/in^2$) | $kg/cm^2$ | |
| None (Control) * | (3081) | 217 | A |
| Maleic Acid | (3553) | 250 | A |
| None (Control)* | (3249) | 228 | B |
| Maleic Acid | (3339) | 235 | B |
| Control * | (3081) | 217 | A |
| PA-21 | (4042) | 284 | A |
| Control* | (3249) | 228 | B |
| PA-21 | (3661) | 257 | B |
| Control * | (3081) | 217 | A |
| 5-(triacetoxysilyl)-Norbornene | (3166) | 223 | A |
| Control* | (3249) | 228 | B |
| 5-(triacetoxysilyl)-Norbornene | (3675) | 258 | B |
| Control* | (3081) | 217 | A |
| 5-Allylbarbituric Acid * | (3492) | 245 | A |
| Control* | (3081) | 228 | A |
| 3-Norbornene propenoic Acid* | (1825) | 128 | A |
| Control* | (3081) | 217 | A |
| *t*-butylperoxy Maleate half ester | (3782) | 266 | A |

* Comparison examples

## Claims

1. A thiolene composition curable free radically under thermal conditions, which comprises a polythiol resin and a polyene resin, characterised in that the composition includes an adhesion promoter compound selected from
   a) acrylic, methacrylic or norbornene acid phosphate esters;
   b) maleic, norbornene dicarboxylic and fumaric acids and half esters and half peresters of maleic, fumaric and norbornene dicarboxylic acids; or
   c) norbornene, acrylic or methacrylic functional silanes having two or three hydrolyzable groups bound to the silicon atom thereof.

2. A composition as claimed in claim 1 characterised in that the adhesion promoter is present at levels of between 0.1% to 10%.

3. A composition as claimed in claim 1 or 2 characterised in that the adhesion promoter is a component uniformly mixed into the thiolene composition prior to application thereof to a substrate on which the composition is to be cured.

4. A composition as claimed in any of claims 1 to 3 characterised in that the composition includes an effective amount of a free radical initiator selected from peroxy compounds, azonitrile compounds or benzopinacol.

5. A composition as claimed in any of claims 1 to 4 characterised in that the adhesion promoter is selected from maleic acid, fumaric acid, norbornene dicarboxylic acid or half esters and half peresters

of the acids.

**6.** A composition as claimed in any of claims 1 to 4 characterized in that the adhesion promoter is an acrylic or norbornene acid phosphate ester.

**7.** A composition as claimed in any of claims 1 to 4 characterized in that the adhesion promoter is a norbornene functional silane.

**8.** A composition as claimed in claim 7 characterized in that the adhesion promoter is 5-(triacetoxysilyl)-norbornene.

**9.** A composition as claimed in claim 5 characterised in that the adhesion promoter is a maleic acid monoperester.

**10.** A composition as claimed in claim 6 characterised in that the adhesion promoter is mono-(methacryloxyethyl)phosphate; bis(methacryloxyethyl)phosphate;mono(acryloxyethyl)phosphate; bis-(acryloxyethyl)phosphate; mixed mono and bis(acryloxyhexyl)phosphate; mixed mono and bis-(methacryloxyhexyl)phosphate; mono and bis 5-norbornenecarboxyethylphosphate; mono and bis 5-norbornenecarboxyhexylphosphate; or 5-norbornenemethylphosphate.

**11.** A composition as claimed in any of claims 1 to 10 characterised in that the polyene includes a plurality of norbornene groups.

**12.** A composition as claimed in claim 11 characterised in that the polyene has the formula

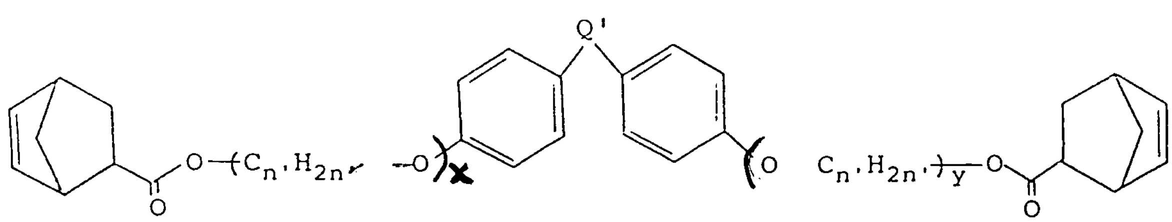

where Q' is $CR^5{}_2$, O, S, $NR^5$ or $SO_2$, $R^5$ is H or alkyl, n' is 1-6, and x and y are integers of one or more.

**13.** A composition as claimed in claim 11 characterised in that the polythiol is an ester of a polyol and an $\alpha$ or $\beta$-mercaptocarboxylic acid.

**14.** An assembly comprising a pair of substrates adhesively bonded together with a cured composition as in claim 1.

**15.** An assembly as claimed in claim 14 characterised in that at least one of the substrates is galvanized steel.

**16.** A method of bonding a pair of substrates comprising: applying a solution in a volatile solvent of a compound selected from

a) acrylic or norbornene acid phosphate esters;

b) maleic, norbornene dicarboxylic and fumaric acids and half acid esters and peresters of maleic, fumaric and norbornene dicarboxylic acids; or

c) norbornene, acrylic or methacrylic functional silanes having two or three hydrolyzable groups bound to the silicon atom thereof;

to one of the substrates, allowing the solvent to evaporate; applying a thermally curable composition of a polythiol and a polyene to one of the substrates; joining the substrates; and, subjecting the joined substrates to elevated temperatures for sufficient time to cause the composition to cure.

**17.** A method as claimed in claim 16 characterised in that at least one of the substrates has a zinc surface.

18. A method as claimed in claim 16 characterised in that at least one of the substrates is galvanized steel.

**Patentansprüche**

1. Thiolenmasse, die unter Wärmebedingungen frei-radikalisch härtbar ist, die ein Polythiolharz und ein Polyenharz enthält, dadurch gekennzeichnet, daß die Masse eine Verbindung zur Haftungsbeschleunigung enthält, ausgewählt aus
   a) Acryl- oder Methacryl- oder Norbornensäurephosphatestern;
   b) Maleinsäure, Norbornendicarbonsäure und Fumarsäure und Halbestern sowie Halbperestern der Maleinsäure, Fumarsäure und Norbornendicarbonsäure; oder
   c) funktionellen Norbornen-, Acryl- oder Methacrylsilanen mit zwei oder drei hydrolisierbaren Gruppen, die an das Siliciumatom davon gebunden sind.

2. Masse nach Anspruch 1, dadurch gekennzeichnet, daß der Haftungsbeschleuniger in Konzentrationen zwischen 0,1 % bis 10 % vorhanden ist.

3. Masse nach Anspruch 1 oder 2, dadurch gekennzeichnet, daß der Haftungsbeschleuniger eine Komponente ist, die gleichmäßig zu der Thiolenmasse vor deren Auftragen auf ein Substrat, auf dem die Masse härten soll, zugemischt wird.

4. Masse nach einem der Ansprüche 1 bis 3, dadurch gekennzeichnet, daß die Masse eine wirksame Menge eines frei-radikalischen Starters enthält, ausgewählt aus Peroxyverbindungen, Azonitrilverbindungen oder Benzpinakol.

5. Masse nach einem der Ansprüche 1 bis 4, dadurch gekennzeichnet, daß der Haftungsbeschleuniger ausgewählt ist aus Maleinsäure, Fumarsäure, Norbornendicarbonsäure oder Halbestern und Halbperestern der Säuren.

6. Masse nach einem der Ansprüche 1 bis 4, dadurch gekennzeichnet, daß der Haftungsbeschleuniger ein Acrylsäure- oder Norbornensäurephosphatester ist.

7. Masse nach einem der Ansprüche 1 bis 4, dadurch gekennzeichnet, daß der Haftungsbeschleuniger ein funktionelles Norbornensilan ist.

8. Masse nach Anspruch 7, dadurch gekennzeichnet, daß der Haftungsbeschleuniger 5-(Triacetoxysilyl)-norbornen ist.

9. Masse nach Anspruch 5, dadurch gekennzeichnet, daß der Haftungsbeschleuniger ein Maleinsäuremonoperester ist.

10. Masse nach Anspruch 6, dadurch gekennzeichnet, daß der Haftungsbeschleuniger Mono-(methacryloxyethyl)-phosphat; Bis(methacryloxyethyl)-phosphat; Mono(acryloxyethyl)-phosphat; Bis-(acryloxyethyl)-phosphat; ein gemischtes Mono- und Bis(acryloxyhexyl)-phosphat; ein gemischtes Mono- und Bis(methacryloxyhexyl)-phosphat; ein gemischtes Mono- und Bis-5-norbornencarboxyethylphosphat; Mono- und Bis-5-norbornencarboxyhexylphosphat; oder 5-Norbornenmethylphosphat ist.

11. Masse nach einem der Ansprüche 1 bis 10, dadurch gekennzeichnet, daß das Polyen eine Vielzahl von Norbornengruppen einschließt.

**12.** Masse nach Anspruch 11, dadurch gekennzeichnet, daß das Polyen die Formel

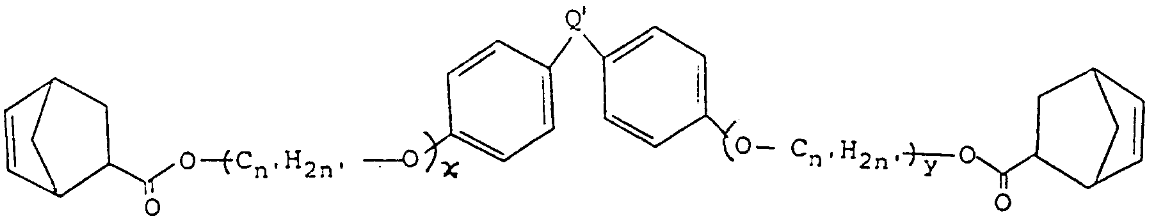

aufweist, worin Q' $CR_2{}^5$, O, S, $NR^5$ oder $SO_2$ bedeutet, $R^5$ für H oder Alkyl steht, n' 1-6 darstellt und x und y ganze Zahlen von eins oder größer darstellen.

**13.** Masse nach Anspruch 11, dadurch gekennzeichnet, daß das Polythiol einen Ester eines Polyol und einer $\alpha$- oder $\beta$-Mercaptocarbonsäure darstellt.

**14.** Anordnung, umfassend ein Paar von Substraten, die mit einer gehärteten Masse nach Anspruch 1 haftend miteinander verklebt sind.

**15.** Anordnung nach Anspruch 14, dadurch gekennzeichnet, daß mindestens eines der Substrate galvaninisierter Stahl ist.

**16.** Verfahren zum verkleben eines Paars von Substraten, das umfaßt: Auftragen einer Lösung in einem flüchtigen Lösungsmittel einer Verbindung, die ausgewählt wird aus

a) Acryl- oder Norbornensäurephosphatestern;

b) Maleinsäure, Norbornendicarbonsäure und Fumarsäure und Halbestern sowie Perestern der Maleinsäure, Fumarsäure und Norbornendicarbonsäure;

c) Norbornen, funktionellen Acryl- oder Methacrylsilanen mit zwei oder drei hydrolisierbaren Gruppen, die an das Siliciumatom davon gebunden sind;

auf eines der Substrate, wobei das Lösungsmittel verdampft wird; Auftragen einer thermisch härtbaren Masse aus einem Polythiol und einem Polyen auf eines der Substrate; Verbinden der Substrate und Aussetzen der verbundenen Substrate gegenüber erhöhten Temperaturen für eine Zeit, die ausreicht, um die Masse zum Härten zu bringen.

**17.** Verfahren nach Anspruch 16, dadurch gekennzeichnet, daß mindestens eines der Substrate eine Zinkoberfläche aufweist.

**18.** Verfahren nach Anspruch 16, dadurch gekennzeichnet, daß mindestens eines der Substrate galvanisierter Stahl ist.

## Revendications

**1.** Une composition de thiol-ène durcissable par voie radicalaire dans des conditions thermiques, qui comprend une résine polythiol et une résine polyène, caractérisée en ce que la composition contient un composé activateur d'adhérence choisi parmi

a) les esters phosphates acides acryliques, méthacryliques ou de norbornène ;

b) les acides maléique, norbornène-dicarboxylique et fumarique et les hémi-esters et hémi-peresters des acides maléique, fumarique et norbornène-dicarboxylique ; ou

c) les silanes à fonction norbornène, acrylique ou méthacrylique ayant deux ou trois groupes hydrolysables liés à leur atome de silicium.

**2.** Une composition telle que revendiquée dans la revendication 1, caractérisée en ce que l'activateur d'adhérence est présent à des taux compris entre 0,1 % et 10 %.

**3.** Une composition telle que revendiquée dans la revendication 1 ou 2, caractérisée en ce que l'activateur d'adhérence est un composant uniformément mélangé dans la composition de thiol-ène avant l'application de celle-ci à un substrat sur lequel la composition doit être durcie.

**4.** Une composition telle que revendiquée dans l'une quelconque des revendications 1 à 3, caractérisée en ce que la composition comprend une quantité efficace d'un initiateur de réaction radicalaire choisi parmi les peroxydes, les azonitriles et le benzopinacol.

**5.** Une composition telle que revendiquée dans l'une quelconque des revendications 1 à 4, caractérisée en ce que l'activateur d'adhérence est choisi parmi l'acide maléique, l'acide fumarique, l'acide norbornène-dicarboxylique ou des hémi-esters et hémi-peresters des acides.

**6.** Une composition telle que revendiquée dans l'une quelconque des revendications 1 à 4, caractérisée en ce que l'activateur d'adhérence est un ester phosphate acide acrylique ou de norbornène.

**7.** Une composition telle que revendiquée dans l'une quelconque des revendications 1 à 4, caractérisée en ce que l'activateur d'adhérence est un silane à fonction norbornène.

**8.** Une composition telle que revendiquée dans la revendication 7, caractérisée en ce que l'activateur d'adhérence est le 5-(triacétoxysilyl)norbornène.

**9.** Une composition telle que revendiquée dans la revendication 5, caractérisée en ce que l'activateur d'adhérence est un monoperester d'acide maléique.

**10.** Une composition telle que revendiquée dans la revendication 6, caractérisée en ce que l'activateur d'adhérence est le phosphate de mono(méthacryloxyéthyle), le phosphate de bis(méthacryloxyéthyle) ; le phosphate de mono(acryloxyéthyle) : le phosphate de bis(acryloxyéthyle) ; un mélange de phosphates de mono- et bis(acryloxyhexyle) ; un mélange de phosphates de mono- et bis(méthacryloxyhexyle) ; le phosphate de mono- et bis(5-norbornènecarboxyéthyle) ; le phosphate de mono- et bis(5-norbornènecarboxyhexyle) ; ou le phosphate de 5-norbornèneméthyle.

**11.** Une composition telle que revendiquée dans l'une quelconque des revendications 1 à 10, caractérisée en ce que le polyène comprend plusieurs groupes norbornène.

**12.** Une composition telle que revendiquée dans la revendication 11, caractérisée en ce que le polyène répond à la formule

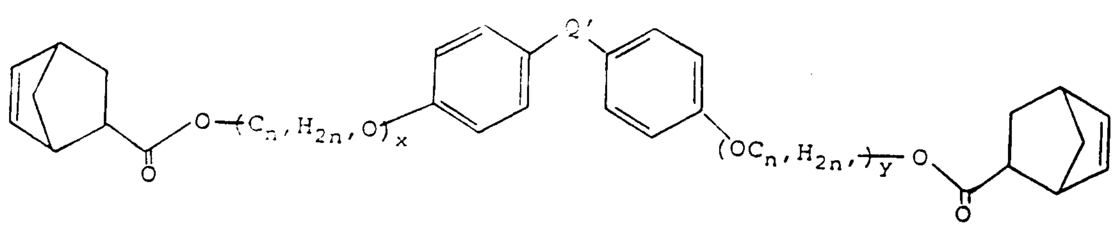

où Q' est $CR^6_2$ , O, S, $NR^6$ ou $SO_2$, $R^6$ est H ou un groupe alkyle, n' est 1 à 6 et x et y sont des nombres entiers de 1 ou plus.

**13.** Une composition telle que revendiquée dans la revendication 11, caractérisée en ce que le polythiol est un ester d'un polyol et d'un acide $\alpha$- ou $\beta$-mercaptocarboxylique.

**14.** Un assemblage comprenant deux substrats liés ensemble par adhérence avec une composition durcie selon la revendication 1.

**15.** Un assemblage tel que revendiqué dans la revendication 14, caractérisé en ce qu'au moins l'un des substrats est en acier galvanisé.

**16.** Un procédé pour coller deux substrats consistant à : appliquer à l'un des substrats une solution dans un solvant volatil d'un composé choisi parmi

a) les esters phosphates acides acryliques, méthacryliques ou de norbornène ;

b) les acides maléique, norbornène-dicarboxylique et fumarique et les hémi-esters et hémi-peresters des acides maléique, fumarique et norbornène-dicarboxylique ; ou

c) les silanes à fonction norbornène, acrylique ou méthacrylique ayant deux ou trois groupes hydrolysables liés à leur atome de silicium ;

laisser le solvant s'évaporer ; appliquer une composition thermiquement durcissable d'un polythiol et d'un polyène à l'un des substrats ; assembler les substrats ; et soumettre les substrats assemblés à des températures élevées pendant un temps suffisant pour faire durcir la composition.

**17.** Un procédé tel que revendiqué dans la revendication 16, caractérisé en ce qu'au moins l'un des substrats a une surface de zinc.

**18.** Un procédé tel que revendiqué dans la revendication 16, caractérisé en ce qu'au moins l'un des substrats est en acier galvanisé.